# EUROPEAN PATENT APPLICATION

(11) **EP 1 059 032 A1**
(43) Date of publication of application: **13.12.2000**
(21) Application number: 99111143.6
(22) Date of filing: 08.06.1999
(51) Int. Cl.: A01N 25/34

(54) **Disinfecting wet wipe**

(71) Applicant: THE PROCTER & GAMBLE COMPANY, Cincinnati, Ohio 45202 (US)
(72) Inventor: Piccini, Andrea, 00151 Rom (IT); Tomarchio, Vincenzo, 91011 Alcamo (TP) (IT)
(74) Representative: Kohol, Sonia

(57) **Abstract**

The present invention relates to a wet wipe for wiping various surfaces, preferably hard surfaces, which comprises man-made fibres and exhibits excellent disinfecting properties. Claimed and described is a wet wipe comprising man-made fibres, a non-acrylate binder and a disinfecting agent.

## Description

### Field of the Invention

The present invention relates to wet wipes, in particular to wet wipes for hard surface cleaning. The wet wipes comprise man-made fibres, a non-acrylate binder and a disinfecting agent. Wet wipes according to the present invention were found to exhibit excellent disinfecting properties.

### Background of the Invention

Wet wipes are typically pre-moistened, disposable towelettes which may be utilised in a variety of applications both domestic and industrial and perform a variety of functions. Wet wipes are typically used to wipe surfaces both animate and inanimate, and may provide numerous benefits such as cleaning, cleansing, disinfecting, and skin care benefits.

One particular application for wet wipes is wiping and or cleaning surfaces and the application of compositions to surfaces, for example kitchen and bathroom surfaces, eyeglasses, shoes and surfaces which require cleaning in industry for example surfaces of machinery or automobiles. In addition wet wipes are also applicable for wiping parts of the human body particularly when wash water is not available, for example when travelling. Wipes are commonly used for human cleansing and wiping such as face and hand cleansing and anal, perineal and genital cleansing for example as intimate hygiene wipes such as feminine wet wipes. Wet wipes may also be used for application of substances to the body including removing and applying of make-up, skin conditioners and medications. Another application of wipes is during diaper changes and also for the treatment of adult and baby dermatitis partly caused by the use of diapers and incontinence devices. Wet wipes also include articles used for the cleaning or grooming of pets.

Wet wipes are commonly constructed from webs of combinations of synthetic, man-made and natural fibres, such as polyolefin fibres, viscose fibres, cotton fibres, which are generally moistened with an aqueous composition which may contain amongst others surfactants, preservatives, oils and scents depending on the end use envisaged.

A variety of webs and liquid compositions suitable for wet wipes and processes for their production is known and disclosed in the art listed below. Typically the webs require a binder in order to provide strength to the web, in particular when wet. Also various agents have been employed to add disinfecting properties to wet wipes.

For example, WO 89/05114 discloses disposable wipes for hard surface cleaning which are impregnated with a liquid composition and EP 0 211 773 discloses a cloth for polishing a car.

EP 0 113 254 discloses an antimicrobial non-woven fabric. The fabric may be provided from natural or synthetic fibres or blends thereof. According to the disclosed invention an antimicrobial agent is selected which forms a colloidal suspension with a given conventional binder.

EP 0 233 943 discloses a non-woven wet wipe which is said to be antimicrobially active. In a preferred embodiment the web for the wet wipes is provided from wood pulp and comprises a non-acrylate binder (ethylene vinyl acetate). The wet wipes further comprise an antimircobial agent, which is mixed into the binder and applied to the non-woven web therewith.

EP 0 602 881 discloses a wet wipe comprising man-made fibres. The wet wipe is made preferably for use in personal hygiene, for example as moist toilet paper. Man-made fibres, together with wood pulp, are employed to ensure a high biodegradability. The wet wipes do not comprise a disinfecting agent.

US 5 888 524 discloses an antimicrobial composition for use with conventional wet wipes and lotions. The wet wipes can be provided from synthetic or natural fibres or a combination thereof. Wet wipes made of man-made fibres are not disclosed and no binder to be used on such a wipe is specified. According to the disclosed invention the wet wipes are saturated with a rather high amount of the antimicrobial composition, indeed, it is taught that the weight of the lotion should be up to 6 times the weight of the dry wipe.

In recent years, the demand for wet wipes comprising man-made fibres has increased, namely for the superior biodegradability of such fibres. Since biodegradation typically happens in a moist environment, it remains a challenge to provide such wet wipe with a sufficient wet strength in use. Hence it remains a challenge to provide wet wipe comprising man-made fibres with suitable binders which ensure sufficient in use wet strength and sufficient after use biodegradability. Moreover, the choice of a particular fibre composition of the web, from which the wet wipe is provided, impacts the absorbency of the web and thereby also the ability of the wet wipe to release any agent onto a treated surface.

In view of this, it is desirable to provide wet wipes comprising man-made fibres. It is further desirable to provide wet wipe which exhibit excellent disinfecting properties. It is yet further desirable to ensure good release of the agent comprised by the wet wipe onto treated surfaces. It is yet even further desirable to achieve those excellent disinfecting properties with a low amount of disinfecting agent It is yet even further desirable to ensure good release of the agent comprised by the wet wipe onto treated surfaces. In addition, it is desirable to provide a wet wipe, namely a hard surface cleaning wipe, which is strong, soft, absorbent and provides good cleaning.

### Summary of the Invention

The present invention relates to a wet wipe for wiping various surfaces, preferably hard surfaces, which comprises man-made fibres and exhibits excellent disinfecting properties. Claimed and described is a wet wipe comprising man-made fibres, a non-acrylate binder and a disinfecting agent.

### Detailed Description of the Invention

The term wet wipe, as used herein, encompasses a product which comprises a substrate and a disinfecting agent. Highly preferably the disinfecting agent are provided as a liquid and typically applied as part of the liquid composition. However, the disinfecting agent may for example be encapsulated or otherwise incorporated in the substrate or may also be provided in a state other than liquid. Such wipes may not comprise a liquid, however, are also encompassed by the term wet wipe, as used herein. The substrate is provided from a web, typically as a sheet of material cut from the web.

Preferred wet wipes in accordance with the present invention are wet wipes for hard surface cleaning, however, the present invention also encompasses moist toilet paper, paper towels, facial tissues, baby wipes and other similar products.

While various embodiments of a web to provide a substrate are within the scope of the present invention and are detailed below, in a preferred embodiment the web is an air-laid non-woven comprising man-made fibres.

The term man-made fibre, as used herein, denotes fibres manufactured from cellulose, either derivative or regenerated. They are distinguished from synthetic fibres which are based on synthetic organic polymers. A derivative fibre, as used herein, is one formed when a chemical derivative of a natural polymer, e.g., cellulose, is prepared, dissolved, and extruded as a continuous filament, and the chemical nature of the derivative is retained after the fibre formation process. A regenerated fibre, as used herein, is one formed when a natural polymer, or its chemical derivative, is dissolved and extruded as a continuous filament, and the chemical nature of the natural polymer is either retained or regenerated after the fibre formation process. Typical examples of man made fibres include: regenerated viscose rayon and cellulose acetate. Preferred man-made fibres have a fineness of 0.5 dtex to 3.0 dtex, more preferably of 1.0 dtex to 2.0 dtex, most preferably of 1.6 dtex to 1.8 dtex.

The preferred man made fibre used for the present invention are Lyocell fibres that are produced by dissolving cellulose fibres in N-methylmorpholine-N-oxide and which are supplied by Tencel Fibres Europe, UK.

Man-made fibres are preferred over synthetic fibres for their higher consumer acceptance and their cheaper and typically more ecological production. Importantly, man-made fibres and in particular cellulose derived man-made fibres exhibit a high biodegradability, hence are more environment friendly when after disposal.

The web according to the present invention is treated with a non-acrylate binder so as to achieve the desirable strength of the web, namely when wet. Further details of the binder are given below.

The web according to the present invention is further treated, typically impregnated, with a disinfecting agent. A highly preferred disinfecting agent is thymol. The disinfecting agent is preferably comprised by the liquid composition which is added to the substrate. Disinfecting agents and liquid compositions useful for the present invention are detailed below.

It has now surprisingly been found that the release of the disinfecting agent onto a treated surface can be highly improved by treating a web comprising man-made fibres with a non-acrylate binder.

Without wishing to be bound by theory based on the present invention the insight was gained that the disinfecting agent is partly entrapped by the substrate. It is believed that the disinfecting agent is entrapped both by the fibres, and in particular by man-made fibres, and by the binder. Hence for a given fibre composition of the web the selection of a binder can increase the release of a given disinfecting agent.

Experimental data prove that the use of a non-acrylate binder on a wet wipe comprising man-made fibres significantly increases the release of the disinfecting agent. Importantly, the disinfecting performance of a wet wipe comprising man-made fibres and a non-acrylate binder is such that satisfactory disinfecting performance is achieved namely for all typical household applications of such a wet wipe listed herein.

The more efficient release of the disinfecting agent allows to use less disinfecting agent in a wet wipe, hence giving considerable advantages in terms of costs of production, safety of production, transport and use and environment friendliness of production and disposal of such wet wipes.

### Web

The web comprises the sheets of material from which the wipes are produced. According to the present invention the web comprises a substrate which is preferably coated or impregnated with a liquid composition. The web may be woven or nonwoven, foam, sponge, battings, balls, puffs, films, or tissue paper comprising man-made fibres, most preferably a nonwoven comprising man-made fibres which may comprise natural or synthetic fibres or mixtures thereof. According to the present invention the web comprises man-made fibres preferably from 5% to 50%, more preferably from 10% to 30%, most preferably from 12% to 25% man-made fibres. Preferably, the fibre compositions further comprise hydrophilic fibre material such as viscose, cotton, or flax and a hydrophobic fibre material such as polyethylene tetraphthalate (PET) or polypropylene (PP) in a ratio of 10%-90% hydrophilic and 90%-10% hydrophobic material by weight. A particularly preferred composition is 70% wood pulp, 12% man-made fibres and 18% latex binder, preferably a butadiene-styrene emulsion. The web preferably has a basis weight of at least 20 gm⁻² and preferably less than 150 gm⁻², and most preferably the base weight is in the range of 20 gm⁻² to 100 gm⁻², more preferably from 50 gm⁻² to 95 gm⁻². The web may have any caliper. Typically, when the web is made by an air laying process, the average web caliper is less than 1.0 mm. More preferably the average caliper of the web is from 0.1 mm to 0.9 mm. The web caliper is measured according to standard EDANA nonwoven industry methodology, reference method # 30.4-89.

In addition to the fibres used to make the web, the web can have other components or materials added thereto as known in the art, including binders as specified. Furthermore, the material may also comprise agents to improve the optical characteristics of the material such as opacifying agents, for example titanium dioxide.

According to the present invention the sheet may be produced by any methods known in the art. For example nonwoven material substrates can be formed by dry forming techniques such as air-laying or wet laying such as on a paper making machine. Other nonwoven manufacturing techniques such as melt blown, spun bonded, needle punched and spun laced methods may also be used. A preferred method is air laying.

### Binder

According to the present invention the web comprises a non-acrylate binder. The term "binder" as used herein describes any agent employed to interlock fibers. Such agents comprise wet strength resins and dry strength resins. It is often desirable particularly for cellulose based materials to add chemical substances known in the art as wet strength resins. A general dissertation on the types of wet strength resins utilised namely in the paper art can be found in TAPPI monograph series No. 29, Wet Strength in Paper and Paperboard, Technical Association of the Pulp and Paper Industry (New York, 1965). In addition to wet strength additives, it can also be desirable to include certain dry strength and lint control additives known in the art such as starch binders.

Preferred binders used to bond non-wovens are polymeric binders, preferably latex binders, more preferably waterborne latex binders. Suitable binders include butadiene-styrene emulsions, ethylene vinyl acetate emulsions, vinyl acetate, vinyl chloride and combinations thereof. Preferred latex binders are made from styrene, butadiene, acrylonitrile-butadiene emulsions or combination thereof.

The term non-acrylate binder, as used herein, encompasses all latex binders that do not comprise acrylic acid or acrylic acid ester or vinyl acetate monomers. Preferred binders according to the present invention include: Butadiene-styrene emulsions, Carboxylated styrene-butadiene emulsion, Acrylonitrile-butadiene emulsions, Polyacrylamide resins, Polyamide-epichlorohydrin resin, Acrylonitrile-Butadiene-Styrene emulsion, Styrene Acrylonitrile. The most preferred binder according the present invention is a butadiene-styrene emulsion, which can be commercially obtained from the Ameribol Svnpol Corp. as Rowene™ SB 5550.

The binder can be applied to the web by any method known in the art. Suitable methods include spraying, printing (e.g. flexographic printing), coating (e.g. gravure coating or flood coating), padding, foaming, impregnation, saturation and further extrusion whereby the composition is forced through tubes in contact with the substrate whilst the substrate passes across the tube or combinations of these application techniques. For example spraying the composition on a rotating surface such as calendar roll that then transfers the composition to the surface of the substrate. The most preferred method for the application of the binder is spraying onto the web. Most preferably the binder is sprayed onto one side of the web in one step of application and onto the other side of the web in a independent step of application.

Typically, the amount of the binder applied to the web, as measured in weight % of the dry weight of the fibres comprised by the web, is from 5% to 30%, more preferably from 10% to 25 %, most preferably from 14% to 22%. Of course the amount of binder to be applied largely depends on the kind to web to be treated.

### Disinfecting agent

According to the present invention the web comprises an disinfecting agent. The disinfecting agent is typically selected from the group consisting of an essential oil and an active thereof, paraben (e.g., methyl paraben, ethyl paraben), glutaraldehyde and mixtures thereof. Essential oils or actives thereof are the preferred antimicrobial compounds to be used herein.

Suitable essential oils or actives thereof to be used herein are those essential oils which exhibit antimicrobial activity and more particularly antibacterial activity. By "actives of essential oils" it is meant herein any ingredient of essential oils that exhibits antimicrobial/antibacterial activity. A further advantage of said essential oils and actives hereof is that they impart pleasant odour to the disinfecting wipes according to the present invention without the need of adding a perfume. Indeed, the disinfecting wipes according to the present invention deliver not only excellent disinfecting performance on infected surfaces but also good scent.

Such essential oils include, but are not limited to, those obtained from thyme, lemongrass, citrus, lemons, oranges, anise, clove, aniseed, cinnamon, geranium, roses, mint, lavender, citronella, eucalyptus, peppermint, camphor, sandalwood and cedar and mixtures thereof. Actives of essential oils to be used herein include, but are not limited to, thymol (present for example in thyme), eugenol (present for example in cinnamon and clove), menthol (present for example in mint), geraniol (present for example in geranium and rose), verbenone (present for example in vervain), eucalyptol and pinocarvone (present in eucalyptus), cedrol (present for example in cedar), anethol (present for example in anise), carvacrol, hinokitiol, berberine, terpineol, limonene, methyl salycilate and mixtures thereof. Preferred actives of essential oils to be used herein are thymol, eugenol, verbenone, eucalyptol, carvacrol, limonene and/or geraniol. Among these actives thymol, geraniol, methyl salycilate and mixtures thereof are preferred. Thymol may be commercially available for example from Aldrich, eugenol may be commercially available for example from Sigma, Systems - Bioindustries (SBI) - Manheimer Inc.

According to the present invention the disinfecting agent is preferably present in the liquid composition at a level of from 0.001 % to 5%, preferably from 0.001% to 3%, more preferably from 0.005% to 1 %, yet more preferably from 0.01% to 0.1% by weight of liquid composition.

It is recognised that any bleach which is preferably present in the liquid composition contributes to the disinfecting properties of the wet wipes. The term disinfecting agent as used herein, however does not encompass bleaches.

### Liquid composition

The liquid composition preferably comprises an disinfecting agent as specified above and preferably other components, such as solvent, bleach, surfactant and an antifoaming agent as specified below.

According to the present invention, the substrate material of the wipes is preferably impregnated or coated with a liquid composition. The composition may be aqueous, alcohol based or an emulsion, either a water-in-oil or a oil-in-water or a multiple emulsion, preferably the emulsion is a oil-in-water emulsion.

Typically, the composition will comprise from 0.1% to 50% by weight of said composition of actives and from 50% to 99.9% water, preferably de-ionised or distilled. Of the active component, preferably 2% to 20% are present in the oil phase and the remainder are present in the aqueous phase.

The liquid composition can provide a number of different benefits when released. For example, in wet-like cleaning wipes for perianal cleaning the water component is released and thereby provides the primary cleansing action for these wipes.

In a preferred embodiment of the present invention the liquid composition (preferably comprising water as a major constituent) comprises a disinfecting component comprising an antimicrobial compound, preferably an essential oil or an active thereof, and a bleach, preferably a peroxygen bleach. Disinfecting wipes comprising such a liquid composition provide effective disinfecting performance on a surface while being safe to the surface treated.

By "effective disinfecting performance" it is meant herein that the disinfecting wipes of the present invention allow significant reduction in the amount of bacteria on an infected surface. Indeed, effective disinfecting may be obtained on various micro-organisms including Gram positive bacteria like Staphylococcus aureus, and Gram negative bacteria like Pseudomonas aeruginosa, as well as on more resistant micro-organisms like fungi (e.g., Candida albicans) present on infected surfaces.

Another advantage of the disinfecting wipes according to the present invention is that besides the disinfecting properties delivered, good cleaning is also provided as the disinfecting polar phase may further comprise surfactants and/or solvents.

An important element of the internal disinfecting polar phase is a bleach or mixtures thereof Any bleach known to those skilled in the art may be suitable to be used herein including any chlorine bleach as well as any peroxygen bleach. The presence of the bleach, preferably the peroxygen bleach, in the disinfecting wipes of the present invention contribute to the disinfecting properties of the wipes.

Suitable chlorine bleaches to be used herein include any compound capable of releasing chlorine when said compound is in contact with water. Suitable chlorine bleaches include alkali metal dichloroisocyanurates as well as alkali metal hypohalites like hypochlorite and/or hypobromite. Preferred chlorine bleaches are alkali metal hypochlorites. Various forms of alkali metal hypochlorite are commercially available, for instance sodium hypochlorite.

Preferred bleaches for use herein are peroxygen bleaches, more particularly hydrogen peroxide, or a water soluble source thereof, or mixtures thereof. Hydrogen peroxide is particularly preferred.

Peroxygen bleaches like hydrogen peroxide are preferred herein as they are generally well accepted from an environmental point of view. For example the decomposition products of hydrogen peroxide are oxygen and water.

As used herein, a hydrogen peroxide source refers to any compound which produces perhydroxyl ions when said compound is in contact with water. Suitable water-soluble sources of hydrogen peroxide for use herein include percarbonates, persilicates, persulphates such as monopersulfate, perborates, peroxyacids such as diperoxydodecandioic acid (DPDA), magnesium perphthalic acid, dialkylperoxides, diacylperoxides, performed percarboxylic acids, organic and inorganic peroxides and/or hydroperoxides and mixtures thereof.

Typically, the bleach or mixtures thereof is present at a level of from 0.001% to 15% by weight of the liquid composition, preferably from 0.001% to 5%, and more preferably from 0.005% to 2%.

The liquid composition may further comprise a detersive surfactant or a mixture thereof Typically, the surfactant or mixtures thereof is present at a level of from 0.001% to 40% by weight of the total internal polar phase, preferably from 0.01 % to 10% and more preferably from 0.05% to 2%.

Suitable detersive surfactants to be used in the present invention include any surfactant known to those skilled in the art like nonionic, anionic, cationic, amphoteric and/or zwitterionic surfactants. Preferred detersive surfactants to be used herein are the amphoteric and/or zwitterionic surfactants.

Suitable amphoteric detersive surfactants to be used herein include amine oxides of the formula R¹R²R³NO, wherein each of R¹, R² and R³ is independently a saturated, substituted or unsubstituted, linear or branched hydrocarbon chain having from 1 to 30 carbon atoms. Preferred amine oxide surfactants to be used according to the present invention are amine oxides of the formula R¹R²R³NO, wherein R¹ is an hydrocarbon chain having from 1 to 30 carbon atoms, preferably from 6 to 20, more preferably from 8 to 16, most preferably from 8 to 12, and wherein R² and R³ are independently substituted or unsubstituted, linear or branched hydrocarbon chains having from 1 to 4 carbon atoms, preferably from 1 to 3 carbon atoms, and more preferably are methyl groups. R¹ may be a saturated, substituted or unsubstituted, linear or branched hydrocarbon chain. Suitable amine oxides for use herein are for instance natural blend C₈-C₁₀ amine oxides as well as C₁₂-C₁₆ amine oxides commercially available from Hoechst. Amine oxides are preferred herein as they deliver effective cleaning performance and further participate to the disinfecting properties of the disinfecting wipes herein.

Suitable zwitterionic surfactants to be used herein contain both cationic and anionic hydrophilic groups on the same molecule at a relatively wide range of pH's. The typical cationic group is a quatemary ammonium group, although other positively charged groups like phosphonium, imidazolinium and sulfonium groups can be used. The typical anionic hydrophilic groups are carboxylates and sulfonates, although other groups such as sulfates, phosphonates, and the like can be used. A generic formula for some zwitterionic surfactants to be used herein is

R¹-N+(R²)(R³)R⁴X-

wherein R¹ is a hydrophobic group; R² and R³ are each C₁-C₄ alkyl, hydroxy alkyl or other substituted alkyl group which can also be joined to form ring structures with the N; R⁴ is a moiety joining the cationic nitrogen atom to the hydrophilic group and is typically an alkylene, hydroxy alkylene, or polyalkoxy group containing from 1 to 10 carbon atoms; and X is the hydrophilic group which is preferably a carboxylate or sulfonate group. Preferred hydrophobic groups R¹ are alkyl groups containing from 1 to 24, preferably less than 18, more preferably less than 16 carbon atoms. The hydrophobic group can contain unsaturation and/or substituents and/or linking groups such as aryl groups, amido groups, ester groups and the like. In general, the simple alkyl groups are preferred for cost and stability reasons.

Highly preferred zwitterionic surfactants include betaine and sulphobetaine surfactants, derivatives thereof or mixtures thereof. Said betaine or sulphobetaine surfactants are preferred herein as they help disinfecting by increasing the permeability of the bacterial cell wall, thus allowing other active ingredients to enter the cell.

Furthermore, due to the mild action profile of said betaine or sulphobetaine surfactants, they are particularly suitable for the cleaning of delicate surfaces, e.g., hard surfaces in contact with food and/or babies. Betaine and sulphobetaine surfactants are also extremely mild to the skin and/or surfaces to be treated.

Suitable betaine and sulphobetaine surfactants to be used herein are the betaine/sulphobetaine and betaine-like detergents wherein the molecule contains both basic and acidic groups which form an inner salt giving the molecule both cationic and anionic hydrophilic groups over a broad range of pH values. Some common examples of these detergents are described in U.S. Pat. Nos. 2,082,275, 2,702,279 and 2,255,082, incorporated herein by reference. Preferred betaine and sulphobetaine surfactants herein are according to the formula 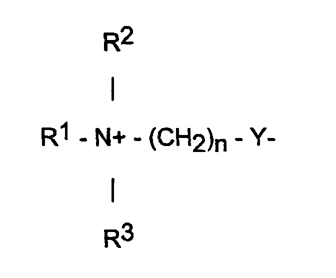 wherein R¹ is a hydrocarbon chain containing from 1 to 24 carbon atoms, preferably from 8 to 18, more preferably from 12 to 14, wherein R² and R³ are hydrocarbon chains containing from 1 to 3 carbon atoms, preferably 1 carbon atom, wherein n is an integer from 1 to 10, preferably from 1 to 6, more preferably is 1, Y is selected from the group consisting of carboxyl and sulfonyl radicals and wherein the sum of R¹, R² and R³ hydrocarbon chains is from 14 to 24 carbon atoms, or mixtures thereof.

Examples of particularly suitable betaine surfactants include C₁₂-C₁₈ alkyl dimethyl betaine such as coconut-betaine and C₁₀-C₁₆ alkyl dimethyl betaine such as laurylbetaine. Coconutbetaine is commercially available from Seppic under the trade name of Amonyl 265". Laurylbetaine is commercially available from Albright & Wilson under the trade name Empigen BB/L".

Other specific zwitterionic surfactants have the generic formulas:

R¹-CO(O)-N(R²)-(C(R³)₂)ₙ-N(R²)₂⁽⁺⁾-(C(R³)₂)n-SO₃⁽⁻⁾;

or

R¹-(C(O)-N(R²)-(C(R³)₂)ₙ-N(R²)₂⁽⁺⁾-(C(R³)2)ₙ-COO(-)

wherein each R¹ is a hydrocarbon, e.g. an alkyl group containing from 8 up to 20, preferably up to 18, more preferably up to 16 carbon atoms, each R² is either a hydrogen (when attached to the amido nitrogen), short chain alkyl or substituted alkyl containing from 1 to 4 carbon atoms, preferably groups selected from the group consisting of methyl, ethyl, propyl, hydroxy substituted ethyl or propyl and mixtures thereof, preferably methyl, each R³ is selected from the group consisting of hydrogen and hydroxy groups and each n is a number from 1 to 4, preferably from 2 to 3, more preferably 3, with no more than one hydroxy group in any (C(R³)₂) moiety. The R¹ groups can be branched and/or unsaturated. The R² groups can also be connected to form ring structures. A surfactant of this type is a C₁₀-C₁₄ fatty acylamidopropylene-(hydroxypropylene)sulfobetaine that is available from the Sherex Company under the trade name "Varion CAS sulfobetaine"".

Suitable nonionic surfactants to be used herein are fatty alcohol ethoxylates and/or propoxylates which are commercially available with a variety of fatty alcohol chain lengths and a variety of ethoxylation degrees. Indeed, the HLB values of such alkoxylated nonionic surfactants depend essentially on the chain length of the fatty alcohol, the nature of the alkoxylation and the degree of alkoxylation. Surfactant catalogues are available which list a number of surfactants, including nonionics, together with their respective HLB values.

Particularly suitable for use herein as nonionic surfactants are the hydrophobic nonionic surfactants having an HLB (hydrophilic-lipophilic balance) below 16 and more preferably below 15. Those hydrophobic nonionic surfactants have been found to provide good grease cutting properties.

Preferred nonionic surfactants for use herein are nonionic surfactants according to the formula RO-(C₂H₄O)ₙ(C₃H₆O)ₘH, wherein R is a C₆ to C₂₂ alkyl chain or a C₆ to C₂₈ alkyl benzene chain, and wherein n+m is from 0 to 20 and n is from 0 to 15 and m is from 0 to 20, preferably n+m is from 1 to 15 and, n and m are from 0.5 to 15, more preferably n+m is from 1 to 10 and, n and m are from 0 to 10. The preferred R chains for use herein are the C₈ to C₂₂ alkyl chains. Accordingly, suitable hydrophobic nonionic surfactants for use herein are Dobanol R 91-2.5 (HLB= 8.1; R is a mixture of C₉ and C₁₁ alkyl chains, n is 2.5 and m is 0), or Lutensol R TO3 (HLB=8; R is a C13 alkyl chains, n is 3 and m is 0), or Lutensol R AO3 (HLB=8; R is a mixture of C₁₃ and C₁₅ alkyl chains, n is 3 and m is 0), or Tergitol R 25L3 (HLB =7.7; R is in the range of C₁₂ to C₁₅ alkyl chain length, n is 3 and m is 0), or Dobanol R 23-3 (HLB=8.1; R is a mixture of C₁₂ and C₁₃ alkyl chains, n is 3 and m is 0), or Dobanol R 23-2 (HLB=6.2; R is a mixture of C₁₂ and C₁₃ alkyl chains, n is 2 and m is 0), or Dobanol R 45-7 (HLB=11.6; R is a mixture of C₁₄ and C₁₅ alkyl chains, n is 7 and m is 0) Dobanol R 23-6.5 (HLB=11.9; R is a mixture of C₁₂ and C₁₃ alkyl chains, n is 6.5 and m is 0), or Dobanol R 25-7 (HLB=12; R is a mixture of C₁₂ and C₁₅ alkyl chains, n is 7 and m is 0), or Dobanol R 91-5 (HLB=11.6; R is a mixture of C₉ and C₁₁ alkyl chains, n is 5 and m is 0), or Dobanol R 91-6 (HLB=12.5; R is a mixture of C₉ and C₁₁ alkyl chains, n is 6 and m is 0), or Dobanol R 91-8 (HLB=13.7; R is a mixture of C₉ and C₁₁ alkyl chains, n is 8 and m is 0), Dobanol R 91-10 (HLB=14.2; R is a mixture of C₉ to C₁₁ alkyl chains, n is 10 and m is 0), or mixtures thereof. Preferred herein are Dobanol R 91-2.5, or Lutensol R TO3, or Lutensol R AO3, or Tergitol R 25L3, or Dobanol R 23-3, or Dobanol R 23-2, or Dobanol R 23-10, or mixtures thereof DobanolR surfactants are commercially available from SHELL. LutensolR surfactants are commercially available from BASF and the Tergitol R surfactants are commercially available from UNION CARBIDE.

Suitable anionic surfactants to be used herein include water soluble salts or acids of the formula ROSO₃M wherein R is preferably a C₆-C₂₄ hydrocarbyl, preferably an alkyl or hydroxyalkyl having a C₈-C₂₀ alkyl component, more preferably a C₈-C₁₈ alkyl or hydroxyalkyl, and M is H or a cation, e.g., an alkali metal cation (e.g., sodium, potassium, lithium), or ammonium or substituted ammonium (e.g., methyl-, dimethyl-, and trimethyl ammonium cations and quaternary ammonium cations, such as tetramethyl-ammonium and dimethyl piperdinium cations and quaternary ammonium cations derived from alkylamines such as ethylamine, diethylamine, triethylamine, and mixtures thereof, and the like).

Other suitable anionic surfactants to be used herein include alkyl-diphenyl-ether-sulphonates and alkyl-carboxylates. Other anionic surfactants can include salts (including, for example, sodium, potassium, ammonium, and substituted ammonium salts such as mono-, di- and triethanolamine salts) of soap, C₉-C₂₀ linear alkylbenzenesulfonates, C₈-C₂₂ primary or secondary alkanesulfonates, C₈-C₂₄ olefinsulfonates, sulfonated polycarboxylic acids prepared by sulfonation of the pyrolyzed product of alkaline earth metal citrates, e.g., as described in British patent specification No. 1,082,179, C₈-C₂₄ alkylpolyglycolethersulfates (containing up to 10 moles of ethylene oxide); alkyl ester sulfonates such as C₁₄₋₁₆ methyl ester sulfonates; acyl glycerol sulfonates, fatty oleyl glycerol sulfates, alkyl phenol ethylene oxide ether sulfates, paraffin sulfonates, alkyl phosphates, isethionates such as the acyl isethionates, N-acyl taurates, alkyl succinamates and sulfosuccinates, monoesters of sulfosuccinate (especially saturated and unsaturated C₁₂-C₁₈ monoesters) diesters of sulfosuccinate (especially saturated and unsaturated C₆-C₁₄ diesters), acyl sarcosinates, sulfates of alkylpolysaccharides such as the sulfates of alkylpolyglucoside (the nonionic nonsulfated compounds being described below), branched primary alkyl sulfates, alkyl polyethoxy carboxylates such as those of the formula RO(CH₂CH₂O)ₖCH₂COO-M+ wherein R is a C₈-C₂₂ alkyl, k is an integer from 0 to 10, and M is a soluble salt-forming cation. Resin acids and hydrogenated resin acids are also suitable, such as rosin, hydrogenated rosin, and resin acids and hydrogenated resin acids present in or derived from tall oil. Further examples are given in "Surface Active Agents and Detergents" (Vol. I and II by Schwartz, Perry and Berch). A variety of such surfactants are also generally disclosed in U.S. Patent 3,929,678, issued December 30, 1975 to Laughlin, et al. at Column 23, line 58 through Column 29, line 23 (herein incorporated by reference).

Preferred anionic surfactants for use herein are the alkyl benzene sulfonates, alkyl sulfates, alkyl alkoxylated sulfates, paraffin sulfonates and mixtures thereof.

The internal disinfecting polar phase according to the present invention has a pH of from 1 to 12, preferably from 1.5 to 10, and more preferably from 2 to 9. The pH can be adjusted by using alkalinizing agents or acidifying agents. Examples of alkalinizing agents are alkali metal hydroxides, such as potassium and/or sodium hydroxide, or alkali metal oxides such as sodium and/or potassium oxide. Examples of acidifying agents are organic or inorganic acids such as citric or sulfuric acid.

Solvents may be present in the liquid composition. These solvents will, advantageously, give an enhanced cleaning to the disinfecting wipes of the present invention. Suitable solvents for incorporation herein include propylene glycol derivatives such as n-butoxypropanol or n-butoxypropoxypropanol, water-soluble CARBITOL, solvents or water-soluble CELLOSOLVE, solvents. Water-soluble CARBITOL, solvents are compounds of the 2-(2-alkoxyethoxy)ethanol class wherein the alkoxy group is derived from ethyl, propyl or butyl. A preferred water-soluble carbitol is 2-(2-butoxyethoxy)ethanol also known as butyl carbitol. Water-soluble CELLOSOLVE, solvents are compounds of the 2-alkoxyethoxyethanol class, with 2-butoxyethoxyethanol being preferred. Other suitable solvents are benzyl alcohol, methanol, ethanol, isopropyl alcohol and diols such as 2-ethyl-1,3-hexanediol and 2,2,4-trimethyl-1 ,3-pentanediol and mixture thereof. Preferred solvents for use herein are n-butoxypropoxypropanol, butyl carbitol, and mixtures thereof. A most preferred solvent for use herein is butyl carbitol.

The liquid composition may further comprise other optional ingredients including radical scavengers, chelating agents, thickeners, builders, buffers, stabilizers, bleach activators, soil suspenders, dye transfer agents, brighteners, anti dusting agents, enzymes, dispersant, dye transfer inhibitors, pigments, perfumes, and dyes and the like.

Suitable radical scavengers for use herein include the well-known substituted mono and di hydroxy benzenes and derivatives thereof, alkyl- and aryl carboxylates and mixtures thereof. Preferred radical scavengers for use herein include di-tert-butyl hydroxy toluene (BHT), p-hydroxy-toluene, hydroquinone (HQ), di-tert-butyl hydroquinone (DTBHQ), mono-tert-butyl hydroquinone (MTBHQ), tert-butyl-hydroxy anysole, p-hydroxy-anysol, benzoic acid, 2,5-dihydroxy benzoic acid, 2,5-dihydroxyterephtalic acid, toluic acid, catechol, t-butyl catechol, 4-allyl-catechol, 4-acetyl catechol, 2-methoxy-phenol, 2-ethoxy-phenol, 2-methoxy-4-(2-propenyl)phenol, 3 ,4-dihydroxy benzaldehyde, 2,3-dihydroxy benzaldehyde, benzylamine, 1,1,3-tris(2-methyl-4-hydroxy-5-t-butylphenyl) butane, tert-butyl-hydroxy-anyline, p-hydroxy anyline as well as n-propyl-gallate. Highly preferred for use herein is di-tert-butyl hydroxy toluene, which is for example commercially available from SHELL under the trade name IONOL CP".

Typically, the radical scavenger, or a mixture thereof is present in the liquid composition up to a level of 5% by weight, preferably from 0.001% to 3% by weight, and more preferably from 0.001% to 1.5%.

Suitable chelating agents to be used herein may be any chelating agent known to those skilled in the art such as the ones selected from the group consisting of phosphonate chelating agents, amino carboxylate chelating agents or other carboxylate chelating agents, or polyfunctionally-substituted aromatic chelating agents and mixtures thereof.

Such phosphonate chelating agents may include etidronic acid (1-hydroxyethylidene-bisphosphonic acid or HEDP) as well as amino phosphonate compounds, including amino alkylene poly (alkylene phosphonate), alkali metal ethane 1 -hydroxy diphosphonates, nitrilo trimethylene phosphonates, ethylene diamine tetra methylene phosphonates, and diethylene triamine penta methylene phosphonates. The phosphonate compounds may be present either in their acid form or as salts of different cations on some or all of their acid functionalities. Preferred phosphonate chelating agents to be used herein are diethylene triamine penta methylene phosphonates. Such phosphonate chelating agents are commercially available from Monsanto under the trade name DEQUEST.

Polyfunctionally-substituted aromatic chelating agents may also be useful herein. See U.S. Patent 3,812,044, issued May 21, 1974, to Connor et al. Preferred compounds of this type in acid form are dihydroxydisulfobenzenes such as 1,2-dihydroxy -3,5-disulfobenzene.

A preferred biodegradable chelating agent for use herein is ethylene diamine N,N'- disuccinic acid, or alkali metal, or alkaline earth, ammonium or substitutes ammonium salts thereof or mixtures thereof Ethylenediamine N,N'- disuccinic acids, especially the (S,S) isomer have been extensively described in US patent 4, 704, 233, November 3, 1987 to Hartman and Perkins. Ethylenediamine N,N'-disuccinic acid is, for instance, commercially available under the tradename ssEDDS, from Palmer Research Laboratories.

Suitable amino carboxylate chelating agents useful herein include ethylene diamine tetra acetate, diethylene triamine pentaacetate, diethylene triamine pentaacetate (DTPA), N-hydroxyethylethylenediamine triacetate, nitrilotri-acetate, ethylenediamine tetraproprionate, triethylenetetraaminehexa-acetate, ethanoldiglycine, propylene diamine tetracetic acid (PDTA) and methyl glycine diacetic acid (MGDA), both in their acid form, or in their alkali metal, ammonium, and substituted ammonium salt forms. Particularly suitable to be used herein are diethylene triamine penta acetic acid (DTPA), propylene diamine tetracetic acid (PDTA) which is, for instance, commercially available from BASF under the trade name Trilon FS, and methyl glycine di-acetic acid (MGDA).

Further carboxylate chelating agents to be used herein includes malonic acid, salicylic acid, glycine, aspartic acid, glutamic acid, dipicolinic acid and derivatives thereof, or mixtures thereof.

Typically, the chelating agent, or a mixture thereof, is present in the liquid composition at a level of from 0.001% to 5% by weight, preferably from 0.001% to 3% by weight and more preferably from 0.001 % to 1.5%.

Other water-soluble or dispersible materials that can be present in the liquid composition include thickeners and viscosity modifiers. Suitable thickeners and viscosity modifiers include polyacrylic and hydrophobically modified polyacrylic resins such as Carbopol and Pemulen, starches such as corn starch, potato starch, tapioca, gums such as guar gum, gum arabic, cellulose ethers such as hydroxypropyl cellulose, hydroxyethyl cellulose, carboxymethyl cellulose, and the like. These thickeners and viscosity modifiers will typically be included in a concentration in the range of from about 0.05 to about 0.5% of the liquid composition.

Again, where water is a major constituent of the liquid composition, water-soluble or dispersible materials that can be present in the internal phase include polycationic polymers to provide steric stabilization at the polar phase-lipid phase interface and nonionic polymers that also stabilize the emulsion. Suitable polycationic polymers include Reten 201, Kymene® 557H and Acco 711. Suitable nonionic polymers include polyethylene glycols (PEG) such as Carbowax and poly(propylene glycol) butyl ether. These polycationic and nonionic polymers will typically be included in a concentration in the range of from about 0.05 to about 1.0% of the liquid composition.

According to the present invention the wet wipes are preferably provided with an emulsion composition comprising a oil phase in the range of 1 % to 20%, preferably 2% to 10%, by weight of the composition. Advantageously, the oil based phase is derived from natural resources such as from vegetable or animal oils or may be synthetic or any mixtures thereof. Suitable vegetable and animal oils for use herein include waxes such as beeswax, lanolin, candelilla, and oils such as glycerine esters and glycerine ethers, fatty acid alcohols, fatty acid esters and fatty acid ethers such as caprylic and capric triglycerides and octylpalmitate. Suitable mineral oils include petroleum based oils such as paraffin and petroleum jelly. Synthetic oils for use herein include ethylenic polymers for example polyethylene wax or silicone based oils. Suitable silicon oils include polydimethylsiloxanes, volatile cyclomethicones, dimethiconols, siloxysilicates and amino- and phenyl derivatives of siloxanes and mixtures thereof. Examples include dimethicone (Dow Corning 200 Fluids), cyclomethicone and dimethiconol (Dow Corning 1401 Fluid), cetyl dimethicone (Dow Corning 2502 Fluid), dimethicone and trimethylsiloxysilicate (Dow Corning 593 Fluid), cyclomethicone (Dow Corning 244, 245, 344 or 345 Fluid), phenyl trimethicone (Dow Corning 556 Fluid), or combinations thereof.

The oil-in-water emulsions typically require emulsifying agents. The emulsifying agents which may be used in the present invention are preferably capable of primary emulsification of oil-in-water emulsions. The emulsifying agent is present in the range of 0.02% to 5.0%, preferably 0.02% to 3.0%, by weight of the composition.

In a preferred embodiment the emulsifying agent is a polymeric type of emulsifying agent such as a copolymer of C10-C30 alkyl acrylates and one or more monomers of acrylic acid, methylacrylic acid or one of their simple esters cross linked with an allyl ether of sucrose or an allyl ether of pentaerythritol. The emulsifying agents which are thus useful in the present invention include Ceteareth-12, Ceteareth-20 or Pemulen TR1 and TR2 which are available from B.F. Goodrich company of the USA. However, other known emulsifying agents such as ethoxylated fatty alcohols, glycerine esters of fatty acids, soaps, sugar derived agents are also suitable for use herein. Other useful emulsifying agents include those disclosed in detail in EP-A-328 355.

According to the present invention the composition may comprise a stability agent or preservative. Stability agents suitable for use herein include phenoxyethanol preferably present in the range of from 0.1 to 1.0%, sodium benzoate, potassium sorbate, methyl paraben, propylparaben, ethylparaben, butylparaben, sodium benzoate, potassium sorbate, benzalkonium chloride, and disodium salt ethylenediamine tetraacetic acid (hereinafter referred to as EDTA) or other EDTA salts (sequestrenes). Sequestrene is a series of complexing agents and metal complexes general of ethylenediaminetetraacetic acid and salts. The total quantity of stability agents should be in the range of 0.1% to 4.0% by weight of the composition.

The composition of the present invention may further comprise from 0.02% to 5.0% by weight of said composition of an emollient or moisturiser. Preferably the emollient is water soluble and includes polyhydric alcohols, such as propylene glycol, glycerin, and also water soluble lanolin derivatives.

### Antifoaming agent

The wet wipes preferably also comprise an antifoaming agent preferably in the liquid composition. Any antifoaming agent known in the art is suitable for the present invention. Highly preferred antifoaming agents are those comprising silicone. Preferred antifoaming agents may further comprise a fatty acid together with a capped alkoxylated nonionic surfactant as defined herein after.

Preferably the amount of antifoaming agent used expressed in weight percent is from 0.01% to 5%, more preferably from 0.1% to 1%, most preferably from 0.1% to 0.6 % of the weight of the dry substrate material.

Typically, the compositions herein comprise from 1·10⁻⁴ % to 10% by weight of the total composition of a fatty acid or a mixture thereof, preferably from 1· 10⁻³% to 5% and more preferably from 1· 10⁻² % to 5%.

Typically, the compositions herein comprise from 1· 10⁻³ % to 20% by weight of the total composition of a capped alkoxylated nonionic surfactant as defined herein or a mixture thereof, preferably from 1·10⁻²% to 10% and more preferably from 5·10⁻²% to 5%.

Typically, the compositions herein comprise from 1·10⁻⁵ % to 5% by weight of the total composition of a silicone or a mixture thereof, preferably from 1·10⁻⁵ % to 1% and more preferably from 1·10⁻⁴ % to 0.5%.

In a preferred embodiment of the present invention, the three foam reducing agents described herein are used together to get optimum defoaming properties to the compositions of the present invention and are typically present at a weight ratio of fatty acid:capped nonionic surfactant: silicone of 1:1·10³ :1·10⁻⁵ to 10:1:1 and preferably from 1: 1·10²:1·10⁻⁴ to 1:1:1.

Suitable fatty acids for use herein are the alkali salts of a C₈-C₂₄ fatty acid. Preferred fatty acids for use herein contain from 8 to 22 carbon atoms, preferably from 8 to 20 and more preferably from 8 to 18. Suitable fatty acids may be selected from caprylic acid, capric acid, lauric acid, myristic acid, palmitic acid, stearic acid and mixtures of fatty acids suitably hardened, derived from natural sources such as plant or animal esters (e.g., palm oil, coconut oil, soybean oil, castor oil, tallow, ground oil, whale and fish oils and/or babassu oil.

Suitable capped alkoxylated nonionic surfactants for use herein are according to the formula:

R₁(O-CH₂-CH₂)ₙ-(OR₂)ₘ-O-R₃

wherein R₁ is a C₈-C₂₄ linear or branched alkyl or alkenyl group, aryl group, alkaryl group, preferably R₁ is a C₈-C₁₈ alkyl or alkenyl group, more preferably a C₁₀-C₁₅ alkyl or alkenyl group, even more preferably a C₁₀-C₁₅ alkyl group; wherein R₂ is a C₁-C₁₀ linear or branched alkyl group, preferably a C₂-C₁₀ linear or branched alkyl group, preferably a C₃ group;wherein R₃ is a C₁-C₁₀ alkyl or alkenyl group, preferably a C₁-C₅ alkyl group, more preferably methyl;and wherein n and m are integers independently ranging in the range of from 1 to 20, preferably from 1 to 10, more preferably from 1 to 5; or mixtures thereof.

Suitable silicones for use herein include any silicone and silica-silicone mixtures. Silicones can be generally represented by alkylated polysiloxane materials while silica is normally used in finely divided forms exemplified by silica aerogels and xerogels and hydrophobic slilcas of various types. These materials can be incorporated as particulates in which the silicone is advantageously releasably incorporated in a water-soluble or water-dispersible, substantially non-surface-active detergent impermeable carrier. Alternatively, the silicone can be dissolved or dispersed in a liquid carrier and applied by spraying on to one or more of the other components.

One preferred antifoaming agent in accordance with the present invention is available from Wacker as Wacker silicone antifoaming emulsion SE 2.

The composition of the present invention may have any pH value between 0 and 14 depending on the use of the wet wipes envisaged. For some applications a liquid composition with pH value below 7 is preferred, while for other applications a liquid composition with pH value above 7 is preferred.

In preparing wet wipe products according to the present invention, the composition is applied to at least one surface of the substrate material. The composition can be applied at any time during the manufacture of the wet wipe. Preferably the composition can be applied to the substrate after the substrate has been dried. Any variety of application methods that evenly distribute lubricious materials having a molten or liquid consistency can be used. Suitable methods include spraying, printing, (e.g. flexographic printing), coating (e.g. gravure coating or flood coating) extrusion whereby the composition is forced through tubes in contact with the substrate whilst the substrate passes across the tube or combinations of these application techniques. For example spraying the composition on a rotating surface such as calender roll that then transfers the composition to the surface of the substrate. The composition can be applied either to one surface of the substrate or both surfaces, preferably both surfaces. The preferred application method is extrusion coating.

The composition can also be applied uniformly or non uniformly to the surfaces of the substrate. By non uniform it is meant that for example the amount, pattern of distribution of the composition can vary over the surface of the substrate. For example some of the surface of the substrate can have greater or lesser amounts of composition, including portions of the surface that do not have any composition on it. Preferably however the composition is uniformly applied to the surfaces of the wipes. The composition is typically applied in an amount of from about 0.5 g to 10 g per gram of substrate, preferably from 1.0 g to 5 g per gram of substrate, most preferably from 2 g to 4 g per gram of dry substrate.

Preferably, the composition can be applied to the substrate at any point after it has been dried. For example the composition can be applied to the substrate prior to calendering or after calendering and prior to being wound up onto a parent roll. Typically, the application will be carried out on a substrate unwound from a roll having a width equal to a substantial number of wipes it is intended to produce. The substrate with the composition applied thereto is then subsequently perforated utilizing standard techniques in order to produce the desired perforation line.

## Claims

1. A wet wipe comprising a substrate wherein said substrate comprises man-made fibres and a non-acrylate binder and said wet wipe further comprises a disinfecting agent.

2. A wet wipe according to Claim 1 wherein said wet wipe further comprises a liquid composition.

3. A wet wipe according to Claim 2 wherein said liquid composition comprises from 0.001 weight % to 5 weight % of said disinfecting agent.

4. A wet wipe according to any one of the preceding claims wherein said substrate comprises from 5 weight % to 50 weight % of said man-made fibres.

5. A wet wipe according to any one of the preceding claims, characterised in that said non-acrylate binder is a butadiene-styrene emulsion.

6. A wet wipe according to any one of the preceding claims, characterised in that said substrate comprises from 5 weight % to 30 weight % of said non-acrylate binder.

7. A wet wipe according to any one of the preceding claims, characterised in that said disinfecting agent is selected from: thymol, geraniol, methyl salycilate and mixtures thereof.

8. A wet wipe according to any one of the preceding claims, characterised in that said wet wipe is provided from an air-laid web.
